Europäisches Patentamt

European Patent Office

Office européen des brevets

(11) Publication number: **0 451 693 A2**

## EUROPEAN PATENT APPLICATION

(21) Application number: 91105296.7

(22) Date of filing: 04.04.91

(51) Int. Cl.5: **H04M 3/42**, H04Q 3/70

(30) Priority: 05.04.90 US 505747

(43) Date of publication of application:
16.10.91 Bulletin 91/42

(84) Designated Contracting States:
CH DE FR GB IT LI NL SE

(71) Applicant: **TEXAS INSTRUMENTS INCORPORATED**
13500 North Central Expressway
Dallas Texas 75265(US)

(72) Inventor: **Scruggs, Jeffrey L.**
1534 Spring Aire Lane
Lewisville, Texas 75067(US)

(74) Representative: **Leiser, Gottfried, Dipl.-Ing. et al**
Patentanwälte Prinz, Leiser, Bunke & Partner
Manzingerweg 7
W-8000 München 60(DE)

(54) **Method and apparatus for providing integrated access to telecommunication based services.**

(57) A method for authorizing access to a plurality of telecommunications services in a network comprises acknowledging a caller's attempt to contact the network, identifying the caller contacting the network as either a subscriber to at least one service offered in the network or not such a subscriber, allowing further access to the network if the caller is identified as a subscriber to the network, and allowing identified subscribers to select which of the plurality of services is desired. After the caller has completed usage of the accessed services, the caller is asked whether or not the caller desires to utilize another of the plurality of services and is allowed to select another of the plurality of services if the caller so desires.

Other systems and methods are also disclosed.

*Fig. 1*

## CROSS-REFERENCE TO RELATED APPLICATIONS

This application is related to the following applications assigned to the assignee of this application, filed concurrently herewith and which are hereby incorporated by reference as if fully set forth herein:
Application Serial Number 505,855 entitled "Enhanced Services Platform for Telecommunications Systems";
Application Serial Number 505,871 entitled "User Interfaces to Telecommunications Based Services";
Application Serial Number 505,870 entitled "Call Delivery Telecommunications Service"; and
Application Serial Number 507,076 entitled "Method and Apparatus for Securing Access to Telecommunications Based Assets and Services".

## FIELD OF THE INVENTION

The present invention relates generally to telecommunications systems providing enhanced voice and data services, and specifically to an integrated method and apparatus for simultaneously supporting multiple voice and data services in a telecommunications environment.

## BACKGROUND OF THE INVENTION

The telecommunications industry has experienced significant changes over recent years. More and more services are now being offered to customers which can be accessed via existing, or in some cases new and dedicated, telecommunications networks. The variety of services now available reflects the competitive nature of the marketplace as well as the advent of new technologies. Telecommunications service providers are offering their customers a plurality of enhanced services designed to increase revenue and expand the utility of telephone instruments. Telecommunications customers via their telephone can now access databases, bank accounts, securities accounts, messaging systems and various other services in addition to long distance telephone service.

Access to these services generally is controlled through the use of authorization codes assigned to users of the services. When a customer desires access to a particular service to which he or she has subscribed, the authorization code must be entered, usually via the touchtone pad on the telephone instrument, before access is granted. Alternatively, certain telephone equipment may permit the entry of the authorization code by passing a card similar to a credit card through a magnetic card reader which detects and transmits the authorization code over the telephone lines thus allowing the customer to avoid entering the code by hand.

One drawback with these methods of authorizing access to a telecommunications service is that anyone with access to a legitimate authorization code can access the service, thereby presenting a serious security problem. This problem is not unique to any particular sequence of steps for accessing the service, since the authorization code is subject to being lost or stolen. If, for example, a subscriber loses the authorization code, or has it stolen, the system can be accessed by an unauthorized subscriber until the authorization code is canceled. In the interim, unauthorized services can result in substantial financial losses to the subscriber and/or the telecommunications service provider. Also, the subscriber is required to enroll once again to access the service. A new authorization code must be issued to the subscriber, and typically a new authorization or subscriber identification card must be created and sent to the subscriber for future use. The subscriber, therefore, is put in the position of having to become accustomed to using a different and unfamiliar authorization code. The subscriber essentially enrolls as a user of the system once again. These enrollment procedures are significantly different than the procedures a subscriber uses to access and use the system on a regular basis. The experience can be extremely frustrating for subscribers, and potentially detrimental to service providers who are dependent upon customer satisfaction to expansion of their services.

Some telecommunications services, such as long distance calling for example, are accessed using a dialing sequence which generally requires that the caller first access the service and then seek authorization to proceed. For example, the current industry standard dial plan for long distance calling card service access requires a subscriber to first access the service by dialing a "0" followed by the 10-digit destination number which the subscriber is calling. The system then prompts the subscriber to enter his or her authorization code which typically is a 14-digit number similar to a credit card number. If the authorization code is recognized by the system as valid, service access is authorized and the call is completed. No commonly available dialing plan supports the opposite dialing sequence, i.e., entry of the authorization code before entry of the destination number, and no currently available service using any dial plan incorporates the caller's voice as a system access security mechanism.

One problem associated with the dialing sequence such as that employed in connection with long distance calling is that since every caller is required to attempt to access the service by entering a 10-digit destination number before authorization is granted, significant call hold time is wasted for those callers who fail the authorization step for one reason or another. The hold time is expensive and does not produce revenue for the telecommunications service provider since charges are made only for the time the caller is connected to the destination number. The result is an inefficient use of the service provider's assets

Methods and apparatus for securing access to telecommunication based services have been developed, such as that disclosed in the aforementioned U.S. Patent Application S.N. 507,076. However, if a subscriber to a variety of services desires to access more than one service in succession, the subscriber generally must attempt to access, and obtain authorization for, each service separately. When the subscriber is finished using one service such as a database, for example, and then desires to access another service such as a bank account, for example, a renewed attempt to access the second service must be initiated. Additionally, the subscriber's attempt to contact the second service typically requires that the process of accessing the service utilize a separate and different access number, and/or a distinct authorization code. If a subscriber desires access to a wide variety of enhanced services, he or she typically has an equally wide variety of authorization and access codes to remember and protect from unauthorized use. Such complexity promotes confusion, and may perhaps deter a subscriber's use of such services.

Access to a wide variety of enhanced telecommunications based services can be accomplished in many ways. Voice verification technology such as that disclosed in U.S. Patent Application S.N. 350,060, which is hereby incorporated herein by reference, can be utilized to provide a method of securing access to telecommunication based services such as, for example, voice messaging, virtual private networks, long distance calling services, call delivery systems, personal banking or securities services, and a variety of database services.

As more enhanced services become available and are offered by telecommunications based service providers there will be an increased need for procedures which allow a uniform, integrated method of accessing a plurality of services.

## SUMMARY OF THE INVENTION

One object of the present invention is to provide an integrated method and apparatus for accessing a plurality of telecommunication based services.

Another object of the present invention is to provide a method and apparatus for accessing a plurality of telecommunication based services which identifies a subscriber to the services using the subscriber's voice.

Another object of the present invention is to provide a method and apparatus which employs voice recognition to respond to spoken commands from a subscriber.

Another object of the present invention is to provide a method and apparatus for accessing a plurality of telecommunication based services which allows the subscriber to the services to successively select from a plurality of services available without obtaining additional authorization to access each separate service.

Another object of the present invention is to provide a method and apparatus for accessing a plurality of telecommunication based services which allows the subscriber to select alternate means for selecting the services to which access is desired.

Another object of the present invention is to provide a method and apparatus for accessing a plurality of telecommunication based services which secures access to the services by comparing the subscriber's voice with a previously stored version of his voice.

The method of the present invention includes the steps of acknowledging an attempt by a caller to use the system; verifying the identity of the caller; allowing access to the system if the caller's identity is verified as being that of a valid subscriber to the system; requesting said subscriber to select the service to which access is desired.

## BRIEF DESCRIPTION OF THE DRAWINGS

The present invention will be described with reference to the accompanying drawings, wherein:
Figure 1 is a flow chart of the method of the present invention.
Figure 2 is a block diagram of the system of the present invention.

## DESCRIPTION OF THE PREFERRED EMBODIMENT

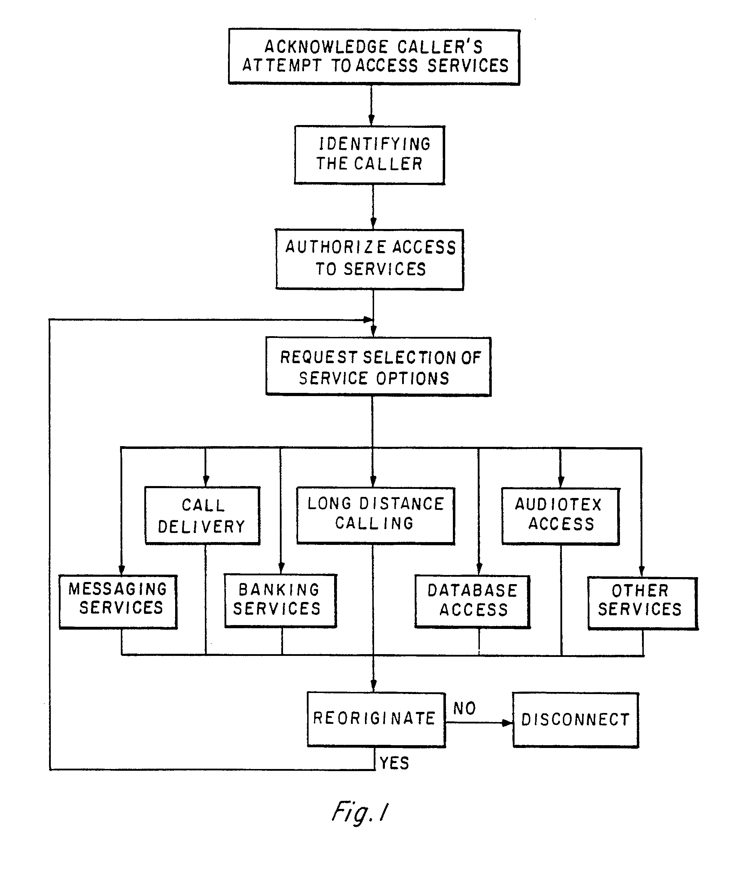

The method of the present invention is shown in the flow chart of Figure 1. As shown, the first step in the method is acknowledging an attempt by a caller to access the network. Acknowledgment may or may not include an audible response to the caller such as a tone or a prerecorded statement indicating that the caller has contacted the network, although some indication to the caller preferably is included.

The caller then undergoes an identification process which may include entry via the keypad of an authorization code, or preferably, via an identification process using the caller's voice, such as the method and apparatus disclosed in U.S. Patent Application S.N. 507,076, which has been incorporated herein by reference. If the caller is identified as an authorized subscriber to the service, or services, access to the service(s) is granted and the caller is connected to the appropriate service.

The next step in the method is to request that the caller select the service or group of services to which access is being sought. This can be accomplished by the caller entering via the telephone keypad a digit, or digits, indicative of the particular service desired, or an appropriate voice command which can be interpreted using speaker independent or dependent voice recognition technology. The commands which the method of the present invention will accept can be designated to all users of the system and identified in speaker independent templates. When the caller says one of the appropriate commands, the command is interpreted and executed to connect the caller with the desired service. Alternatively, user specific voice commands can be utilized to allow users of the system to design their own service selection commands through interactive training sessions in which the user defines and trains the system to perform certain operations in response to specific commands.

In accordance with the present invention, upon completion of the caller's use of a particular service, the caller is prompted as to whether or not access to another of the offered services is desired. The present invention is capable of utilizing many different methods of prompting the user to determine whether or not access to other services is desired. The prompt may be a simple tone indicative of the prompt, or in keeping with one overall aspect of the invention, the prompt may include a prerecorded voice message asking the user whether or not access to additional services is desired. If the caller wishes to utilize another of the services, the command to do so is entered via the keypad or voice command as was done for the indication of the initial service. The process can continue as the subscriber wishes to use additional services available. It should be noted that the caller is not required to undergo separate identification procedures before accessing additional services within the network. The caller's identity is verified only once when initially obtaining access to the services being offered. There is thus provided a method and apparatus for integrated access to a plurality of telecommunication based services.

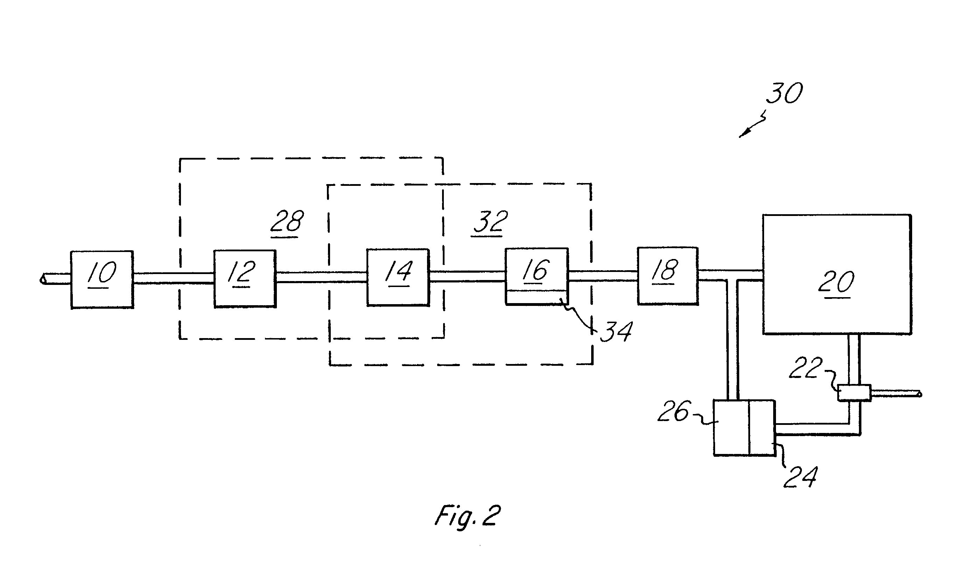

A system of the present invention is shown in the block diagram of Figure 2. This system 30 for providing access to a plurality of telecommunication services comprises means for answering a dialed telephone number 10 directed to the services 20, means for requesting the caller to provide an authorization code 12, means for requesting a voice sample from the caller 14, means for comparing the voice sample with a stored template of the caller's voice 16, and means for allowing access to the plurality of services 18 if the output of said comparing means 16 identified the caller as a valid subscriber to the services 20. The means for identifying 16 may further comprise means for verifying the caller's identity based upon the caller's voice sample 32 which may include the means for requiring the caller provide a voice sample 14 and means for comparing the voice sample with a stored sample of the subscriber's voice 16.

System 30 may also comprise means for requesting whether or not the caller desires to utilize another of said plurality of services 22 and means for allowing the caller to select another of said plurality of services if the caller so desires 24, wherein such means for allowing a caller to select another of said plurality of services 24 is operable without requiring additional identification of the caller.

The means for allowing the caller to select another of said plurality of services 24 comprises means for entering a code indicative of the services desired 26 via a telephone keypad, or for entering a voice command indicative of the service desired, without requiring additional identification of the caller. It is also possible for the means for identifying 16 to comprise means for verifying the caller's identity 34 based alternatively upon either the caller's voice, or other personal identification data entered via a telephone instrument keypad.

Additionally, it can be understood that the means for requesting the caller to provide an authorization code 12 and the means for requesting a voice sample from the caller 14 comprise the single means for requesting the caller to verbally provide his authorization code 28.

Preferred Embodiment Features

Various important features of a preferred embodiment are summarized below.

A system for providing access to a plurality of telecommunication services comprising, means for answering a dialed telephone number directed to the services, means for requesting the caller to provide an authorization code, means for requesting a voice sample from the caller, means for comparing the voice sample with a stored template of the caller's voice, and means for allowing access to the plurality of services if the output of the comparing means identifies the caller as a valid subscriber to the services. The means for identifying may include means for verifying the caller's identity based upon the caller's voice sample and means for comparing the voice sample with a stored sample of the subscriber's voice. The means for identifying may also include means for verifying the caller's identity based alternatively upon either the caller's voice or other personal identification data entered via a telephone instrument keypad. The means for allowing a caller to select another of the plurality of services is operable without requiring additional identification of the caller, and may additionally include means for entering a code indicative of the service desired via a telephone keypad without requiring additional identification of the caller. Furthermore, as an alternative to entering a code indicative of the service desired, a caller may enter a voice command indicative of the service desired. The means for requesting the caller to provide an authorization code and the means for requesting a voice sample from the caller may be a single means for requesting the caller to verbally provide his authorization code. Such authorization code may be a number otherwise familiar to the user, such as the caller's home telephone number or social security number. Furthermore, the voice sample may comprise a statement of a predetermined phrase indicative of the caller's identity, such as a series of digits, the caller's home telephone number, or social security number. Additionally, this system may further include means for requesting whether or not the caller desires to utilize another of a plurality of services and means for allowing the caller to select another of the plurality of services if the caller so desires.

While the present invention can be implemented in a wide variety of physical embodiments or architectures, it is preferred that the enhanced services platform disclosed in U.S. Patent Application S.N. 505,855, which has been incorporated herein by reference, be utilized. The enhanced services platform disclosed therein has been designed to provide a common platform for network based delivery of a wide variety of enhanced services including, without limitation, long distance calling services, voice messaging, and call delivery services. Additionally, the present invention is capable of being used to incorporate new technologies as they become available.

**Claims**

1. A method for authorizing access to a plurality of telecommunications services in a network, comprising the steps of:
   acknowledging a caller's attempt to contact the network;
   identifying the caller contacting the network as either a subscriber to at least one service offered in the network or not such a subscriber;
   allowing further access to the network if the caller is identified as a subscriber to the network; and
   allowing identified subscribers to select which of said plurality of services is desired.

2. The method for authorizing access to a plurality of telecommunications services in a network as defined in Claim 1, wherein said identifying step comprises the steps of verifying the caller's identity based upon the caller's voice sample.

3. The method for authorizing access to a plurality of telecommunications services in a network as defined in Claim 2, wherein said identifying step comprises:
   requiring the caller to provide a voice sample; and
   comparing said voice sample with a stored sample of the subscriber's voice.

4. The method for authorizing access to a plurality of telecommunications services in a network as defined in Claim 1, wherein said identified subscribers are allowed to select which of said plurality of services is desired by voice command.

5. The method as defined in Claim 4, wherein said identified subscribers are allowed to alternatively select which of said plurality of services is desired by DTMF command.

6. The method for authorizing access to a plurality of telecommunications services in a network as defined in Claim 1, further comprising the steps of after the caller has completed usage of the accessed service, requesting whether or not the caller desires to utilize another of said plurality of services; and allowing the caller to select another of said plurality of services if the caller so desires.

7. The method for authorizing access to a plurality of telecommunications services in a network as defined in Claim 6, wherein said caller is allowed to select another of said plurality of services by entering a code indicative of the service desired via the telephone keypad without requiring additional identification of the caller.

8. The method for authorizing access to a plurality of telecommunications services in a network as defined in Claim 6, wherein said caller is allowed to select another of said plurality of services by entering a voice command indicative of the service desired without requiring additional identification of the caller.

caller.

9.  The method for authorizing access to a plurality of telecommunications services in a network as defined in Claim 1, wherein said identifying step comprises verifying the caller's identity based alternatively upon either the caller's voice, or other personal identification data entered via a telephone instrument keypad.

10. A method of providing access to a plurality of telecommunications services comprising the steps of:
    answering a dialed telephone number directed to the services;
    requesting the caller to provide an authorization code;
    requesting a voice sample from the caller;
    comparing the voice sample with a stored template of the caller's voice; and
    allowing access to the plurality of services if the result of said comparing step identifies the caller as a valid subscriber to the services.

11. The method of providing access to a plurality of telecommunications services as defined in Claim 10, wherein said steps of requesting the caller to provide an authorization code and requesting a voice sample from the caller comprise the single step of requesting the caller to verbally provide his authorization code.

12. The method of providing access to a plurality of telecommunications services as defined in Claim 11, wherein said authorization code comprises a number otherwise familiar to said user.

13. The method of providing access to a plurality of telecommunications services as defined in Claim 12, wherein said authorization code comprises either the caller's home telephone number or social security number.

14. The method of providing access to a plurality of telecommunications services as defined in Claim 10, wherein said voice sample comprises a statement of a predetermined phrase indicative of the caller's identity.

15. The method of providing access to a plurality of telecommunications services as defined in Claim 14, wherein said phrase comprises a series of digits indicative of the identity of the

ACKNOWLEDGE CALLER'S
ATTEMPT TO ACCESS SERVICES

IDENTIFYING
THE CALLER

AUTHORIZE ACCESS
TO SERVICES

REQUEST SELECTION OF
SERVICE OPTIONS

CALL
DELIVERY

LONG DISTANCE
CALLING

AUDIOTEX
ACCESS

MESSAGING
SERVICES

BANKING
SERVICES

DATABASE
ACCESS

OTHER
SERVICES

REORIGINATE

NO

DISCONNECT

YES

*Fig. I*

Fig. 2

EP 0 451 693 A2